**Europäisches Patentamt**

**European Patent Office**

**Office européen des brevets**

(19)

(11) Veröffentlichungsnummer : **0 016 362**
**B1**

(12)

# EUROPÄISCHE PATENTSCHRIFT

(45) Veröffentlichungstag der Patentschrift :
**11.05.83**

(21) Anmeldenummer : **80101024.0**

(22) Anmeldetag : **01.03.80**

(51) Int. Cl.³ : **B 23 K 20/12**

(54) **Reibschweissmaschine mit erweitertem Arbeitsbereich.**

(30) Priorität : **09.03.79 DE 2909267**

(43) Veröffentlichungstag der Anmeldung :
**01.10.80 Patentblatt 80/20**

(45) Bekanntmachung des Hinweises auf die Patenterteilung : **11.05.83 Patentblatt 83/19**

(84) Benannte Vertragsstaaten :
**AT BE CH DE FR GB IT LU NL SE**

(56) Entgegenhaltungen :
**CH A 511 089**
**DE A 2 321 820**
**DE B 1 627 466**
**GB A 1 456 461**
**US A 3 739 974**

(73) Patentinhaber : **KUKA Schweissanlagen & Roboter GmbH**
**Zugspitzstrasse 140**
**D-8900 Augsburg (DE)**

(72) Erfinder : **Steinhart, Wilhelm, Ing.**
**Buchenstrasse 12**
**D-8904 Friedberg (DE)**

(74) Vertreter : **Ernicke, Hans-Dieter, Dipl.-Ing.**
**Schwibbogenplatz 2b**
**D-8900 Augsburg (DE)**

Reibschweißmaschine mit erweitertem Arbeitsbereich

Die Erfindung betrifft eine Reibschweißmaschine zum Verschweißen zweier Werkstücke, wobei ein erstes, drehbares Einspannelement für das erste Werkstück und ein zweites, durch einen Arbeitszylinder axial verschiebbares Einspannelement für das zweite Werkstück vorgesehen ist.

Um einen größeren Arbeitsbereich bzw. Einstellbereich der Vorschubkräfte des Arbeitszylinders zu erreichen, ist es, beispielsweise durch die GB-A-14 56 461 bekannt, zwei Arbeitszylinder hintereinander anzuordnen. Eine solche Tandem-Zylinderanordnung hat jedoch den Nachteil des großen Platzbedarfs.

Bei einer anderen Reibschweißeinrichtung gemäß der CH-A-51 10 89 ist der Arbeitszylinder seinerseits noch axial verschiebbar gelagert und kann mittels einer zusätzlichen Vorschubeinrichtung, beispielsweise mit einer Kurvenscheibe, in Axialrichtung verschoben werden. Diese Einrichtung ist umständlich und empfindlich.

Der Erfindung liegt die Aufgabe zugrunde, eine Reibschweißmaschine der eingangs genannten Art anzugeben, die ohne oder allenfalls mit nur geringem zusätzlichen Platzbedarf eine einfache und sichere Erweiterung des Arbeitsbereiches zuläßt.

Diese Aufgabe wird gemäß der Erfindung dadurch gelöst, daß in den Arbeitskolben des Arbeitszylinders ein Zusatzzylinder kleineren Durchmessers eingesetzt ist, dessen Kolben mit dem zweiten Einspannelement verbunden ist und dessen Zylinderkammern unabhängig von denen des Arbeitszylinders ansteuerbar sind. Durch das Einsetzen des unabhängig vom Arbeitszylinder ansteuerbaren Zusatzzylinders in den Kolben des ersteren und die Befestigung des Einspannelementes am Kolben des Zusatzzylinders ergibt sich eine Anordnung, die praktisch nicht mehr Platz benötigt, als eine Reibschweißmaschine mit nur einem Arbeitszylinder und die dennoch eine wesentliche Vergrößerung des Arbeitsbereiches ermöglicht. Die erfindungsgemäße Ausbildung läßt sich grundsätzlich bei bereits vorhandenen Reibschweißmaschinen durch Austausch des Kolbens des Arbeitszylinders gegen einen erfindungsgemäß mit Zusatzzylinder versehenen Kolben nachrüsten.

Bei der Montage wird im einfachsten Fall der Zusatzzylinder in den Arbeitskolben des Arbeitszylinders eingeschraubt. Wird die Möglichkeit der zusätzlichen Vergrößerung des Arbeitsbereiches nicht benötigt, so daß der Arbeitsbereich allein vom Arbeitszylinder bestrichen werden kann, so läßt sich im Rahmen der Erfindung der Zusatzzylinder mit dem zweiten Einspannelement auch fest verbinden, beispielsweise dadurch, daß er an einem flanschartigen Ansatz des Einspannelementes mit diesem verschraubt wird.

Die Erfindung ist in der Zeichnung beispielsweise und schematisch dargestellt. Es zeigen :

Figur 1 die erfindungsgemäße Zylinderanordnung als Teilaggregat einer Reibschweißmaschine,

Figur 2 ein Zeitdiagramm, bei dem gemäß dem Stand der Technik lediglich der Arbeitszylinder zur Wirkung kommt und

Figur 3 ein weiteres Diagramm bei gleichzeitiger Anwendung von Arbeits- und Zusatzzylinder.

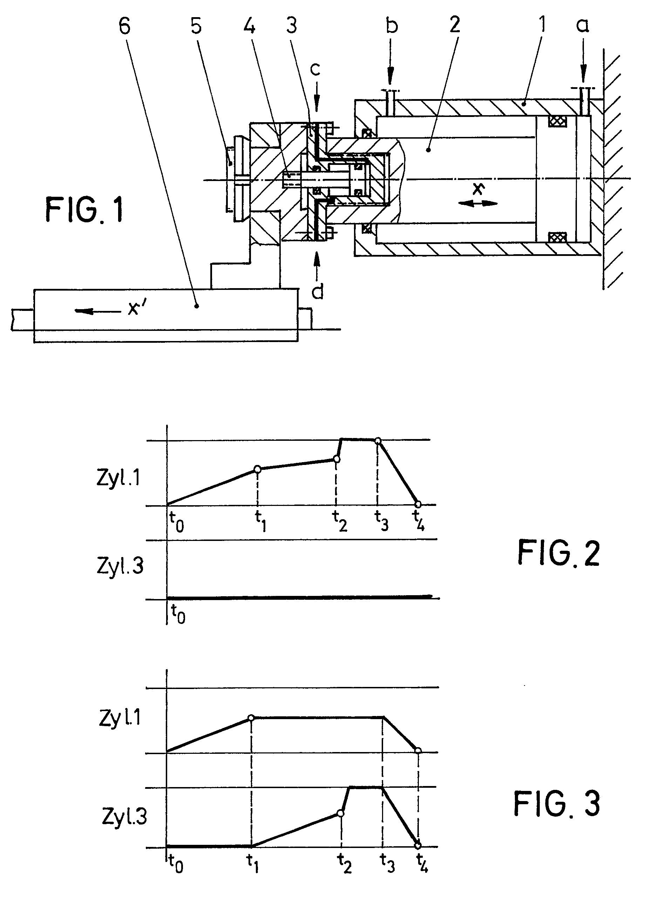

In Figur 1 ist ein stationär angeordneter Arbeitszylinder 1 mit einem Arbeitskolben 2 dargestellt. Dieser Arbeitskolben wird durch Beaufschlagung seiner Kolbenfläche mit Druckmittel beim Einlaß a oder b wahlweise nach links oder rechts (Pfeil x) bewegt. Aufgrund der Dimensionierung dieses Arbeitszylinders 1 ergibt sich eine maximale Arbeitskraft durch den zur Verfügung stehenden maximalen Druck des Druckmittels und durch die Kolbenfläche. Die untere Grenze der zur Verfügung stehenden Arbeitskraft bestimmt sich aus dem am Druckregelventil sicher einstellbaren minimalen Druckmitteldruck und ebenfalls der Kolbenfläche.

Eine Erweiterung des Arbeitskraftbereichs und damit des Arbeitsbereichs schlechthin wird erfindungsgemäß dadurch realisiert, daß die bei der obigen Betrachtung konstant gebliebene Kolbenfläche verändert wird. Diese Änderung wurd dadurch realisiert, daß in den Kolben des Arbeitszylinders axial ein Zusatzzylinder 3 eingesetzt, vorzugsweise eingeschraubt wird. Über Einlaßöffnungen c bzw. d wird der Arbeitskolben 4 des Zusatzzylinders 3 in Richtung x hin- und herbewegt.

Mit dieser Konfiguration werden nun additiv die vom Arbeitszylinder 1 und vom Zusatzzylinder 3 jeweils einzeln erreichbaren Kraftbereiche nutzbar. Dazu ist ein sog. Druckstück 5 vorgesehen, das über einen Support 6 geführt den für das Reibschweißen erforderlichen Reib- und Stauchdruck auf ein Werkstück überträgt. Das erwähnte Druckstück 5 ist dabei auf den Arbeitskolben 4 des Zusatzzylinders 3 aufgeschraubt.

Die Dimensionierung des Zusatzzylinders 3 ist so gewählt, daß der eigene Arbeitsbereich unmittelbar an den unteren Grenzwert des Arbeitsbereichs des (Haupt-) Arbeitszylinders 1 anschließt. Cgf. ist es auch empfehlenswert, daß eine geringfügige Überlappung erreicht wird.

Aus Gründen der Zugänglichkeit für die Einlaßöffnungen c und d ist der Zusatzzylinder 3 mit einem flanschartigen Ansatz versehen, der über den Außendurchmesser des Arbeitskolbens 2 des Arbeitszylinders 1 hinausreicht und als Widerlager für das Druckstück 5 dient.

Solange der Arbeitsbereich alleine vom (Haupt-) Arbeitszylinder 1 bestrichen werden kann, wird der Zusatzzylinder am flanschartigen Ansatz mit dem Druckstück 5 verschraubt. Für Druckkräfte aus dem Arbeitsbereich des Zusatzzylinders 3 wird diese Schraubverbindung gelöst und der Arbeitszylinder 1 wirkt nunmehr nur als Hubzylinder.

In Fig. 2 ist ein spezielles Vorschubprogramm für den Arbeitszylinder 1 dargestellt, und zwar bei arretiertem Zusatzzylinder. Zum Zeitpunkt $t_0$ wird der Arbeitskolben mit Druckmittel beaufschlagt und in Richtung Werkstück bewegt. Zur Zeit $t_1$ beginnt der Reibvorgang zwischen den zu verschweißenden Werkstücken. Nach Ablauf einer material- und werkstückspezifischen Reibzeit wird zu einem Zeitpunkt $t_2$ der Stauchvorgang eingeleitet, der zum Zeitpunkt $t_3$ beendet ist. Durch Beaufschlagung des Arbeitszylinders 1 von der entgegengesetzten Seite (b in Fig. 1) her wird dieser in die Ursprungsposition zurückgeschoben. Zum Zeitpunkt $t_4$ befindet sich der Arbeitszylinder 1 wieder in Ruhe (Ausgangs-) stellung ; der Zusatzzylinder 3 war während der gesamten Zeitspanne in Ruhe.

In Fig. 3 ist ein Vorschubprogramm für den Arbeits- und den Zusatzzylinder dargestellt. Zu einem Zeitpunkt $t_0$ wird der Arbeitszylinder mit Druckmittel beaufschlagt und bewegt. Der Arbeitszylinder macht dabei eine reine Leerhubbewegung und wird anschließend — zu einem Zeitpunkt $t_1$ — hinsichtlich der Druckmittelbeaufschlagung eingesperrt. Zum gleichen Zeitpunkt wird nunmehr der Zusatzzylinder mit Druckmittel beaufschlagt, wodurch die zu verschweißenden Werkstücke gegeneinander reiben. Zu einem Zeitpunkt $t_2$ wird über den Zusatzzylinder 3 der Stauchvorgang eingeleitet und somit der Schweißvorgang an sich zum Abschluß gebracht. Zum Zeitpunkt $t_3$ ist der Schweißprozeß beendet und beide Zylinder, der Arbeits- und der Zusatzzylinder werden in ihre Ausgangsposition zurückbewegt. Zum Zeitpunkt $t_4$ ist die Ausgangsstellung wieder erreicht.

Anhand dieses in Fig. 3 dargestellten Beispiels läßt sich leicht die Erweiterung des Arbeitsbereichs der erfindungsgemäßen Reibschweißmaschine ersehen. Im Bereich zwischen $t_1$ und $t_3$ überlagerte sich die Reib- und Stauchphase des Zusatzzylinders der Vorschubphase des Arbeitszylinders.

## Ansprüche

1. Reibschweißmaschine zum Verschweißen zweier Werkstücke, wobei ein erstes, drehbares Einspannelement für das erste Werkstück und ein zweites, durch einen Arbeitszylinder (1) axial verschiebbares Einspannelement (5) für das zweite Werkstück vorgesehen ist, dadurch gekennzeichnet, daß in den Arbeitskolben (2) des Arbeitszylinders (1) ein Zusatzzylinder (3) kleineren Durchmessers eingesetzt ist, dessen Kolben (4) mit dem zweiten Einspannelement (5) verbunden ist und dessen Zylinderkammern unabhängig von jenen des Arbeitszylinders (1) ansteuerbar sind.

2. Reibschweißmaschine nach Anspruch 1, dadurch gekennzeichnet, daß der Zusatzzylinder (3) in den Arbeitskolben (2) des Arbeitszylinders (1) eingeschraubt ist.

3. Reibschweißmaschine nach Anspruch 1 oder 2, dadurch gekennzeichnet, daß der Zusatzzylinder (3) mit dem zweiten Einspannelement (5) fest verbindbar ist.

## Claims

1. Friction-welding machine for welding two workpieces, wherein a first, rotatable clamping element is provided for the first workpiece and a second clamping element (5), axially displaceable by a working cylinder (1), is provided for the second workpiece, characterised in that in the working piston (2) of the working cylinder (1) an auxiliary cylinder (3) of smaller diameter is inserted, whose piston (4) is connected to the second clamping element (5) and whose cylinder chambers can be regulated independently of those of the working cylinder (1).

2. Friction-welding machine according to claim 1, characterised in that the auxiliary cylinder (3) is screwed into the working piston (2) of the working cylinder (1).

3. Friction-welding machine according to claim 1 or 2, characterised in that the auxiliary cylinder (3) is rigidly secured to the second clamping element (5).

## Revendications

1. Machine à souder par friction pour souder deux pièces, dans laquelle il est prévu un premier élément tournant de serrage de la première pièce et un second élément de serrage (4) de la seconde pièce pouvant coulisser axialement sous l'action d'un cylindre moteur (1), caractérisée en ce que dans le piston moteur (2) du cylindre moteur (1) est engagé un cylindre supplémentaire (3) de diamètre plus petit, dont le piston (4) est relié au second élément de serrage (5) et dont les chambres de cylindre peuvent être commandées indépendamment de celles du cylindre moteur (1).

2. Machine à souder par friction selon la revendication 1, caractérisée en ce que le cylindre supplémentaire (3) est vissé dans le piston moteur (2) du cylindre moteur (1).

3. Machine à souder par friction selon la revendication 1 ou 2, caractérisée en ce que le cylindre supplémentaire (3) peut être relié de manière rigide au second élément de serrage (5).

FIG.1

FIG.2

FIG.3